## Europäisches Patentamt
## European Patent Office
## Office européen des brevets

(19)

(11) Veröffentlichungsnummer: **0 014 884**
**B1**

(12) # EUROPÄISCHE PATENTSCHRIFT

(45) Veröffentlichungstag der Patentschrift:
17.11.82

(51) Int. Cl.³: **C 01 C 1/24**

(21) Anmeldenummer: 80100546.3

(22) Anmeldetag: 04.02.80

(54) Verfahren zur Aufarbeitung von ammoniumsulfathaltigem Abwasser.

(30) Priorität: 15.02.79 DE 2905779
07.02.79 DE 2936153

(43) Veröffentlichungstag der Anmeldung:
03.09.80 Patentblatt 80/18

(45) Bekanntmachung des Hinweises auf die Patenterteilung:
17.11.82 Patentblatt 82/46

(84) Benannte Vertragsstaaten:
AT BE CH DE FR GB IT NL SE

(56) Entgegenhaltungen:
BE-A-675 075
GB-A-1 158 998
GB-A-1 160 580
NL-A-6 805 152
US-A-2 071 282

(73) Patentinhaber: BAYER ANTWERPEN N.V., Kanaaldok
B 1 Kruisschans, B-2040 Antwerpen 4 (BE)

(72) Erfinder: Denecker, Gabriel, Dr., Vinkenlaan 16,
B-2180 Heide-Kalmthout (BE)
Erfinder: Sluyts, Domien, Elzenlaan 4, B-2091 Stabroek
(BE)
Erfinder: Putseys, Roland, Dr., Sparrendreef 3,
B-2180Heide-Kalmthout (BE)
Erfinder: Van Herck, Willy, Dipl.-Ing., Jacobuslei 108,
B-2130 Brasschaat (BE)
Erfinder: Claes, Ludo, Dipl.-Ing., Paulusstraat 50,
B-2130 Brasschaat (BE)
Erfinder: Spott, Georg, Dipl.-Ing., Ratherstrasse 75,
D-4150 Krefeld (DE)

(74) Vertreter: Bünemann, Gerhard, Dr. et al, c/o Bayer AG
Zentralbereich, Patente Marken und Lizenzen,
D-5090 Leverkusen 1, Bayerwerk (DE)

EP 0 014 884 B1

## Verfahren zur Aufarbeitung von ammoniumsulfathaltigem Abwasser

Die Erfindung betrifft die Aufarbeitung von ammoniumsulfathaltigen Abwässern, insbesondere die Aufarbeitung solcher ammoniumsulfathaltiger wäßriger Abwässer, die neben organischen Verunreinigungen auch Ammoniumnitrat enthalten, wie sie beispielsweise bei der ε-Caprolactamherstellung anfallen.

Bei der großtechnischen Herstellung von ε-Caprolactam aus Cyclohexanon und Hydroxylammoniumsalzen über die bekannte Beckmannsche Umlagerung fällt je nach den speziellen Herstellungsverfahren eine bis zu etwa 4,5 Gew.-%Teile Ammoniumsulfat je Gew.-Teil Caprolactam enthaltende wäßrige Lösung an. Aus dieser ammoniumsulfathaltigen Lösung wird, nach Abtrennung des ε-Caprolactams, durch Verdampfen des Wassers kristallines Ammoniumsulfat erhalten, das als Düngemittel Verwendung findet. Die hierfür eingesetzte Verdampfungskristallisationsapparatur ist mehrstufig ausgestaltet, die aufzukonzentrierende ammoniumsulfathaltige wäßrige Lösung und der Heizdampf bzw. die Brüden werden zur wirtschaftlichen Nutzung der eingesetzten Heizenergie über die Wärmetauscher der einzelnen Stufen im Gegenstrom miteinander in Kontakt gebracht.

Die ammoniumsulfathaltige wäßrige Lösung enthält gegebenenfalls kleine Mengen Ammoniumnitrat, die aus der Hydroxylaminherstellung stammen. Sie enthält ferner organische Zwischen- und Nebenprodukte aus den verschiedenen Teilschritten der ε-Caprolactamproduktion. Bei einer vollständigen Eindampfung dieser Abwässer entstehen stark verunreinigte und nicht verwertbare Düngesalze. Es ist bekannt, daß die beim Eindampfen stattfindende Aufkonzentrierung des Ammoniumnitrates und der gelösten organischen Verbindungen, besonders bei relativ hohen Ammoniumnitratkonzentrationen und bei sauren pH-Werten, zu explosiv verlaufenden Oxidations- und Zersetzungsreaktionen führen kann. Dies ist mit ein Grund dafür, daß aus ammoniumnitrathaltigen Abwässern das Ammoniumsulfat bisher nur mit einer bis zu etwa 95%igen Ausbeute durch Verdampfungskristallisation aus derartigen ε-Caprolactamablaugen gewonnen werden konnte.

In der NL-A-6 805 152 wird ein Verfahren zur Gewinnung von Ammoniumsulfat aus einer wäßrigen Lösung, die 1 bis 30 g Methionin pro 100 g Ammoniumsulfat enthält, beschrieben. Das Verfahren ist auf die Gewinnung eines Ammoniumsulfats mit einem Methioningehalt unter 1 Gew.-% gerichtet, wobei die Kristallisation bei einem pH-Wert zwischen 0,2 und 6 durchgeführt wird.

Bei diesem bekannten Verfahren erhält man durch teilweises Aufkonzentrieren unter definierten pH-Bedingungen ein Kristallisat, das, obwohl es in sehr niedrigen Ausbeuten (von 20 bis 50%) erhalten wird, schon mit bis zu 1 Gew.-% Methionin verunreinigt ist. Um eine vollständige Gewinnung des Ammoniumsulfates zu gestatten, muß die restliche wäßrige Ammoniumsulfatlösung integral in die Herstellung des betreffenden organischen Produktes recycliert werden.

In der US-A-2 071 282 wird ein Verfahren zur Trennung von wasserlöslichen Aminosäuren und Ammoniumsulfat beschrieben. Bei diesem Verfahren handelt es sich also ähnlich wie bei der vorstehend abgehandelten NL-A um die Trennung von Aminosäuren und Ammoniumsulfat, jedoch mittels eines Verfahrens, das unter anderem eine Fällung des Ammoniumsulfats durch Zugabe von Ammoniak beinhaltet.

Beide Verfahren sind nicht geeignet für eine wirksame und technisch befriedigende Aufarbeitung der hier angesprochenen Abwässer.

Aufgabe der vorliegenden Erfindung ist es, ein einfaches, betriebssicheres und großtechnisch wirtschaftlich durchführbares Verfahren zur Aufarbeitung von verunreinigten ammoniumsulfathaltigen Abwässern, wie sie beispielsweise bei der Herstellung von ε-Caprolactam anfallen, bereitzustellen.

Gegenstand der vorliegenden Erfindung ist somit ein Verfahren zur Aufarbeitung von mit organischen Verbindungen und gegebenenfalls Ammoniumnitrat verunreinigten ammoniumsulfathaltigen Abwässern durch Verdampfungskristallisation, gegebenenfalls in mehreren Stufen, mit Abtrennung von kristallinem Ammoniumsulfat, das dadurch gekennzeichnet ist, daß man die aus der letzten Eindampfstufe ausgeschleuste Restmutterlauge, gegebenenfalls nach einer Vakuum-Kühlungskristallisation bei 10 bis 80°C und einer Abtrennung des entstehenden Ammoniumsulfats das vorzugsweise in die Verdampfungskristallisation zurückgeführt wird, mit Wasser verdünnt, anschließend die Lösung bei einem Druck bis zu 506 k Pa (5,06 bar) mit Ammoniak in flüssiger Form und/oder als hochkonzentriertes Ammoniakwasser versetzt, auskristallisierendes Ammoniumsulfat von der ammoniakalischen Mutterlauge abtrennt, gegebenenfalls ammoniakfrei wäscht, und in die Verdampfungskristallisation zurückführt und aus der ammoniakalischen Mutterlauge das Ammoniak destillativ zurückgewinnt.

Enthält das aufzuarbeitende Abwasser Ammoniumnitrat, so wird das Abwasser, gegebenenfalls in mehreren Stufen, unter Abtrennung von kristallinem Ammoniumsulfat auf Ammoniumnitratkonzentrationen von 6 bis 14, vorzugsweise 8 bis 12 Gew.-% durch Verdampfungskristallisation aufkonzentriert.

Es wurde gefunden, daß man grobkörniges, streufähiges und farbloses Ammoniumsulfat in überraschend hoher Reinheit und mit bis zu 99,8%iger Ausbeute aus mit organischen Verbindungen und gegebenenfalls mit Ammoniumnitrat verunreinigten, ammoniumsulfathaltigen Abwässern, wie sie

beispielsweise bei der ε-Caprolactamsynthese anfallen, erhalten kann, indem man diese Abwässer gegebenenfalls zunächst auf Ammoniumnitratkonzentrationen von 6 bis 14 gew.-%, vorzugsweise 8 bis 12 Gew.-%, gegebenenfalls in mehreren Stufen, eindampft und anschließend die bei der Abtrennung des grobkörnigen Ammoniumsulfats resultierende aufkonzentrierte, mit organischen Verbindungen und gegebenenfalls Ammoniumnitrat beladene, heiße Ammoniumsulfatlösung einer nachgeschalteten Fällungskristallisation unter gleichzeitiger Rückführung des gefällten Ammoniumsulfats in die Eindampfungsstufe unterwirft. Die aus der letzten Eindampfungsstufe auszuschleusende Restmutterlauge wird gegebenenfalls einer Vakuum-Kühlungskristallisation bei $10-80°C$, vorzugsweise $35-60°C$ unterworfen, das entstehende Ammoniumsulfat abgetrennt und vorzugsweise in die Verdampfungskristallisation zurückgeführt. Vor der Fällungskristallisation, gegebenenfalls hinter einer Vakuum-Kühlungskristallisation, wird eine Verdünnung mit Wasser vorgenommen. Die resultierende Lösung wird bei einem Druck bis zu etwa 5 kg/cm² (5,06 bar), vorzugsweise zwischen 1 und 2 kg/cm² (1,01 bis 2,02 bar), mit Ammoniak versetzt, auskristallisiertes Ammoniumsulfat wird von der ammoniakalischen Mutterlauge abgetrennt, gegebenenfalls ammoniakfrei gewaschen, und in die Verdampfungskristallisation zurückgeführt und aus der ammoniakalischen Mutterlauge wird das Ammoniak destillativ zurückgewonnen.

Die Fällungskristallisation wird so durchgeführt, daß die aufkonzentrierte heiße Ammoniumsulfatlösung aus der Verdampfungskristallisation bzw. aus einer gegebenenfalls anschließenden Vakuum-Kühlungskristallisation zunächst wieder mit Wasser oder mit Brüdenkondensat, z. B. aus der Verdampfungskristallisation, zu einer bei 0 bis etwa 50°C, vorzugsweise 10 bis 35°C, gesättigten oder nahezu gesättigten Ammoniumsulfatlösung verdünnt wird.

Anschließend wird sie unter Abkühlung auf eine Temperatur von 0 bis etwa 50°C, vorzugsweise 10 bis 35°C und bei einem Druck bis zu etwa 5 kg/cm² (5,06 bar), vorzugsweise 1 bis 2 kg/cm² (1,01 bis 2,02 bar) mit Ammoniak versetzt. Das hierbei gefällte Ammoniumsulfat wird nach Abtrennung von der ammoniakalischen Kristallisationsmutterlauge in den verdünnten ammoniumsulfathaltigen Abwässern der ε-Caprolactamproduktion gelöst bzw. suspendiert und erneut der Verdampfungskristallisation zugesetzt. Die erfindungsgemäße Kombination von Verfahrensschritten führt überraschenderweise trotz des hohen Gehaltes an organischen Verunreinigungen in der Fällungskristallisationsstufe und trotz der bis zu 99,8%igen Entfernung des Ammoniumsulfats zu einem hochreinen streufähigen Düngesalz mit einem mittleren Korndurchmesser von mindestens 1 mm.

Bei der Produktion von ε-Caprolactam fallen mindestens zwei Abwasserströme an, die beide Ammoniumsulfat enthalten und mehr oder weniger mit organischen Verbindungen verunreinigt sind. Das aus der Oximierungsstufe enthält meistens noch zusätzlich Ammoniumnitrat. Nach dem erfindungsgemäßen Verfahren können beide Abwasserströme sowohl getrennt als auch zusammen aufgearbeitet werden. Vorzugsweise werden die anfallenden Abwasserströme jedoch vermischt und anschließend gemeinsam nach dem erfindungsgemäßen Verfahren aufgearbeitet.

Dies ist jedoch nur bei Abwässern, die z. B. aus der ε-Caprolactam-Herstellung stammen, der Fall. Soll z. B. ein ammoniumsulfathaltiges Abwasser, was kein Nitrat, z. B. ein Abwasser aus der Acrylsäureester-Produktion, jedoch noch organische Verbindungen enthält, aufgearbeitet werden, so ist dies mit dem vorliegenden Verfahren — wie bereits vorstehend ausgeführt — ebenfalls möglich.

Das erfindungsgemäße Verfahren wird vorzugsweise kontinuierlich durchgeführt. Es ist jedoch selbstverständlich, daß zumindest Teilschritte, wie z. B. die Fällung des Ammoniumsulfats mittels Ammoniak absatzweise erfolgen können.

Das für die Fällungskristallisation notwendige Ammoniak kann in gasförmigem Zustand und/oder als hochkonzentriertes Ammoniakwasser und/oder in flüssiger Form zugesetzt werden. Bevorzugt wird der Zusatz des Ammoniaks in flüssiger Form. Das gefällte Ammoniumsulfat wird von der ammoniakalischen Mutterlauge weitgehend abgetrennt und gegebenenfalls ammoniakfrei gewaschen. Aus dieser Mutterlauge wird das bei dem Fällungsschritt verwendete Ammoniak in einer hierfür geeigneten Destillationsapparatur zurückgewonnen und der Fällungskristallisation gegebenenfalls erneut zugesetzt. Die Wiedergewinnung des Fällungsmittels Ammoniak erfordert nach dem erfindungsgemäßen Verfahren einen sehr geringen Energiebedarf.

Aus den bei der Fällungskristallisation in der Mutterlauge noch zurückbleibenden Ammoniumsalzen kann Ammoniak nach Behandlung mit alkalischen Verbindungen, wie z. B. Natronlauge, Kalilauge, Calciumoxid oder Kalkmilch wiedergewonnen werden. Das dann noch verbleibende, organisch belastete Abwasser kann mit geringer Salzbelastung einer z. B. biologischen Abwasserbehandlung zugeführt werden.

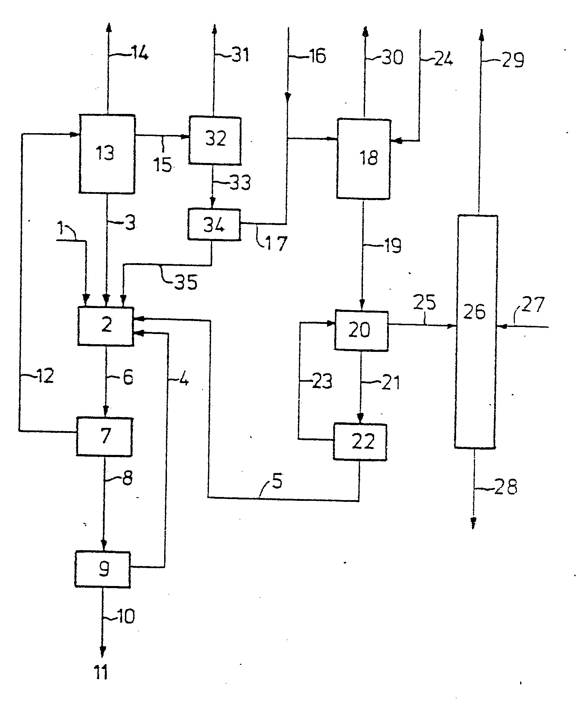

Nachfolgend wird eine Ausführungsform der vorliegenden Erfindung anhand eines Fließschemas, dargestellt in der Figur erläutert. Hierbei kommt den Zahlen folgende Bedeutung zu:

| | |
|---|---|
| 1, 4, 12, 15, 16, 17, 23, 25, 27, 28: | Leitungen für Flüssigkeiten |
| 3, 6, 8, 19, 21, 33, 35: | Leitungen für Suspensionen |
| 5, 10: | Leitungen für feuchtes Salz |
| 14, 31: | Brüdenleitung |
| 24, 29, 30: | Ammoniakleitungen |
| 2: | Rührgefäß |

3

| 7, 20, 34: | Eindickungsvorrichtung |
| 9, 22: | Zentrifugen |
| 11: | Trockneranlage |
| 13: | Verdampfungskristallisationsapparatur |
| 18: | Fällungskristallisationsapparatur |
| 32: | Vakuum-Kühlungskristallisationsapparatur |
| 26: | Destillationsanlage |

Im einzelnen wird das Verfahren dieser Ausführungsform wie folgt durchgeführt:

Das ammoniumsulfathaltige Abwasser 1 aus der ε-Caprolactamherstellung wird in einem Rührgefäß 2 vermischt mit der Ammoniumsulfatsuspension 3 aus der Verdampfungskristallisationsapparatur 13, mit der über Zentrifuge 9 abgetrennten Mutterlauge 4, mit der aus der Eindickungsvorrichtung 34 ablaufenden Suspension 35 und mit dem mittels Ammoniak gefällten und über Zentrifuge 22 von der ammoniakalischen Mutterlauge 23 weitgehend befreiten festen Ammoniumsulfat 5. Die resultierende Kristallsuspension 6 wird in einem Eindickungsgefäß 7 aufkonzentriert und als Kristallbrei 8 in Mutterlauge 4 und feuchtes Salz 10 getrennt. Letzteres wird einer Trockneranlage 11 zugeführt.

Der an Ammoniumsulfat gesättigte Überlauf 12 des Eindickers 7 wird in einer Verdampfungskristallisationsapparatur 13 in bekannter Weise eingedampft. Es resultiert neben Kristallsuspension 3 und Brüden 14, eine an Ammoniumsulfat und an organischen Verbindungen gesättigte Restlauge 15.

Diese wird gegebenenfalls einer Vakuum-Kühlungskristallisation 32 unterworfen, aus der die Brüden 31 abgezogen werden und die Suspension über die Leitung 33 der Eindickungsvorrichtung 34 zugeführt wird. Die Verdünnung mit Wasser 16 kann hinter der Kühlungskristallisation 32, bzw. vor der Fällungskristallisation 18 vorgenommen werden.

Die Ammoniumsulfatlösung 17 wird in einem Fällungskristallisator 18 mit flüssigem Ammoniak 24 versetzt und der resultierende Kristallbrei 19 wird nach Eindicken in einem dazu ausgelegten Gefäß 20 über 22 in festes Ammoniumsulfat 5 und Mutterlauge 23 getrennt. Der Überlauf 25 des Eindickers 20 gelangt zur Wiedergewinnung des Ammoniaks in eine ein- oder zweistufige Destillationsanlage 26. Zur Rückgewinnung des in den verbleibenden Ammoniumsalzen noch gebundenen Ammoniaks werden Alkaliverbindungen 27 zugesetzt. Es resultieren einerseits ein Ammoniakstrom 29 und andererseits ein sowohl ammoniak als auch ammoniumfreies Abwasser 28, das wegen seiner weitgehend herabgesetzten Salzbelastung zum Abbau der gelösten organischen Verbindungen und gegebenenfalls des Nitrates ohne weiteres einer biologischen Abwasserbehandlung zugeleitet werden kann.

Nachfolgend wird das erfindungsgemäße Verfahren beispielhaft noch weiter erläutert:

### Beispiel 1

7.200 kg/h Abwasser aus der ε-Caprolactamproduktion (36,8gew.-%ig in Ammoniumsulfat) werden zusammen mit über die Zentrifugen der Verdampfungs-Kristallisationsstufe von den Ammoniumsulfatkristallen getrennter Mutterlauge und über die Zentrifuge der Fällungskristallisationsstufe von der ammoniakalischen Mutterlauge getrenntem Ammoniumsulfat in ein Rührgefäß zugegeben, in das auch Salzbrei aus der Verdampfungskristallisationsstufe fließt. Die in diesem Rührgefäß daraus resultierende Kristallsuspension wird eingedickt und anschließend über Zentrifugen von der Mutterlauge getrennt. Bei der Aufkonzentrierung der aus dem Eindicker überlaufenden Flüssigkeit entstehen insgesamt 4370 kg/h Brüden und man erhält nach Trocknung des feuchten Düngesalzes 2641 kg/h grobkristallines und farbloses Ammoniumsulfat (mittlerer Korndurchmesser: 1,1 mm; Stickstoffgehalt von etwa 21 Gew.-%), in einer Ausbeute von 99,7% d. Th. Es werden aus der Verdampfungskristallisationsapparatur 310 kg/h Restlauge mit folgender Zusammensetzung ausgeschleust: Ammoniumsulfat: 41,8 Gew.-%; Ammoniumnitrat: 9,3 Gew.-%. Sie wird sofort mittels Brüdenkondensat bis zu einer 36,0gew.-%igen Ammoniumsulfatlösung verdünnt und anschließend auf 30° C abgekühlt.

Es werden dieser ammoniumsulfathaltigen Lösung 209 kg/h flüssiges Ammoniak zugegeben, um bei Normaldruck eine 33%ige Ammoniaklösung herzustellen unter Fällung von 121 kg/h kristallinem Ammoniumsulfat. Die Temperatur wird mittels Verdampfungskühlung auf 15°C gehalten. Das ausgefällte Ammoniumsulfat wird nach dem Eindicken weitgehend von der ammoniakalischen Mutterlauge getrennt und in dem genannten Rührgefäß neu eingesetzt. Nach dem Aufdestillieren der ammoniakalischen Mutterlauge wird das zurückgewonnene gasförmige Ammoniak zusammen mit dem aus dem Fällungskristallisator verdampften Gas verflüssigt, um bei der Fällung des Ammoniumsulfates erneut eingesetzt zu werden. Bei der destillativen Rückgewinnung von 33 kg/h 25%igem Ammoniakwasser aus dem mit 42 kg/h 50%iger Natronlauge alkalisch gestellten Bodenprodukt einer 1. Destillationskolonne erhält man 248 kg/h Abwasser mit folgender Zusammensetzung: Natriumsulfat: 3,8 Gew.-%; Natriumnitrat: 12,3 Gew.-%.

## Beispiel 2

Die in Beispiel 1 aus der Verdampfungskristallisation ausgeschleuste heiße Restlauge wird einer Vakuum-Kühlungskristallisation unterworfen. Man erhält unter Absaugen von etwa 19 kg/h Brüden eine Kristallsuspension, die, nach dem Eindicken bis zu einem ca. 50gew.-%igen Salzbrei (68 kg/h), ebenfalls in das genannte Rührgefäß zugeben wird. Die aus dem Rührgefäß resultierende Suspension wird nach Eindickung über Zentrifugen in Mutterlauge und feuchtes Düngesalz getrennt. Nach der Trocknung erhält man 2,644 kg/h grobkörniges und farbloses Ammoniumsulfat (Ausbeute: 99,8% d. Th.).

Aus der Eindickungsvorrichtung der Vakuum-Kühlungskristallisationsstufe werden 257 kg/h Mutterlauge entnommen mit folgender Zusammensetzung: Ammoniumsulfat: 37,2 Gew.-%; Ammoniumnitrat: 11,2 Gew.-%. Sie wird sofort mittels Brüdenkondensat bis zu einer 35,5gew.-%igen Ammoniumsulfatlösung verdünnt und anschließend auf 30°C gekühlt. Es werden dieser Lösung 159 kg/h flüssiges Ammoniak zugegeben, um bei Normaldruck eine 33%ige Ammoniaklösung herzustellen unter Fällung von 90 kg/h Ammoniumsulfatsalz. Die Temperatur wird unter Verdampfung von Ammoniak auf 15°C gehalten. Das ausgefällte Ammoniumsulfat wird nach Eindickung weitgehend von der in Ammoniak gesättigten Mutterlauge getrennt und in dem genannten Rührgefäß neu eingesetzt. Gasförmiges Ammoniak wird aus der ammoniakalischen Mutterlauge unter Zugabe von 38 kg/h 50%iger Natronlauge zurückgewonnen und zusammen mit dem aus der Fällungsstufe verdampften Gas verflüssigt, um bei der Fällung des Ammoniumsulfats erneut eingesetzt zu werden. Man erhält 209 kg/h Abwasser mit folgendem Salzgehalt; Natriumsulfat: 2,9 Gew.-%; Natriumnitrat: 14,6 Gew.-%.

## Patentansprüche

1. Verfahren zur Aufarbeitung von mit organischen Verbindungen und gegebenenfalls Ammoniumnitrat verunreinigten ammoniumsulfathaltigen Abwässern durch Verdampfungskristallisation, gegebenenfalls in mehreren Stufen, mit Abtrennung von kristallinem Ammoniumsulfat, dadurch gekennzeichnet, daß man die aus der letzten Eindampfstufe ausgeschleuste Restmutterlauge, gegebenenfalls nach einer Vakuum-Kühlungskristallisation bei 10 bis 80°C und einer Abtrennung des entstehenden Ammoniumsulfats, das vorzugsweise in die Verdampfungskristallisation zurückgeführt wird, mit Wasser verdünnt, anschließend die Lösung bei einem Druck bis zu 506 k Pa (5,06 bar) mit Ammoniak in flüssiger Form und/oder als hochkonzentriertes Ammoniakwasser versetzt, auskristallisierendes Ammoniumsulfat von der ammoniakalischen Mutterlauge abtrennt, gegebenenfalls ammoniakfrei wäscht, und in die Verdampfungskristallisation zurückführt und aus der ammoniakalischen Mutterlauge das Ammoniak destillativ zurückgewinnt.

2. Verfahren nach Anspruch 1, dadurch gekennzeichnet, daß man solche Abwässer, die Ammoniumnitrat enthalten, gegebenenfalls in mehreren Stufen, unter Abtrenung von kristallinem Ammoniumsulfat auf Ammoniumnitratkonzentrationen von 6 bis 14 Gew.-% aufkonzentriert.

3. Verfahren nach Anspruch 1 oder 2, dadurch gekennzeichnet, daß die ammoniakalische Fällung des Ammoniumsulfats bei der Sättigungskonzentration durchgeführt wird.

4. Verfahren nach einem oder mehreren der Ansprüche 1 bis 3, dadurch gekennzeichnet, daß die bei der Sättgiung abzuführende Wärme bei der Verwendung von flüssigem Ammoniak und/oder von einem hochkonzentrierten Ammoniakwasser durch Verdampfungskühlung bei dem Einspeisen einer dazu erforderlichen zusätzlichen Ammoniakmenge abgeleitet wird.

5. Verfahren nach einem oder mehreren der Ansprüche 1 bis 4, dadurch gekennzeichnet, daß die Abwässer unter Abtrennung von kristallinem Ammoniumsulfat auf Ammoniumnitratkonzentrationen von 8 bis 12 Gew.-% aufkonzentriert werden.

6. Verfahren nach einem oder mehreren der Ansprüche 1 bis 5, dadurch gekennzeichnet, daß die bei der Aufkonzentrierung durch Verdampfungskristallisation und gegebenenfalls durch anschließende Vakuum-Kühlungs-Kristallisation resultierende Lösung mit Wasser zu einer zwischen 10 bis 35°C gesättigten Ammoniumsulfatlösung verdünnt und diese unter Abkühlung auf eine Temperatur von 10 bis 35°C bei einem Druck von 101 und 202 k Pa (1,01 bis 2,02 bar) mit Ammoniak versetzt wird.

7. Verfahren nach einem oder mehreren der Ansprüche 1 bis 6, dadurch gekennzeichnet, daß die Vakuum-Kühlungs-Kristallisation der Restmutterlauge bei Temperaturen von 35 bis 60°C, vorzugsweise 40 bis 55°C, vorgenommen wird.

## Claims

1. Process for working up ammonium-sulphate-containing effluents, which are contaminated with organic compounds and optionally ammonium nitrate, by evaporative crystallization, optionally in several stages, accompanied by the separation of ammonium sulphate, characterised in that the residual mother liquor discharged from the final evaporation stage is diluted with water, optionally following vacuum cooling crystallization at 10 to 80°C and separation of the ammonium sulphate forming, which is preferably returned to the evaporative crystallization, then ammonia in liquid form and/or in the form of highly concentrated ammonia water is added to the solution at a pressure of up to 506 k Pa (5.06 bar), the ammonium sulphate which crystallizes out is separated from the ammoniacal mother liquor, is optionally washed free from ammonia, and is returned to the evaporative crystallization and the ammonia is recovered from the ammoniacal mother liquor by distillation.

2. Process according to Claim 1, characterised in that those effluents which contain ammonium nitrate are concentrated, optionally in several stages, while crystalline ammonium sulphate is separated off, to ammonium nitrate concentrations of 6 to 14% by weight.

3. Process according to Claim 1 or 2, characterised in that the ammoniacal precipitation of the ammonium sulphate is carried out at the concentration of saturation.

4. Process according to one of more of Claims 1 to 3, characterised in that the heat to be removed during the saturation when using liquid ammonia and/or a highly concentrated ammonia water is drawn off by evaporation cooling during the introduction of an additional amount of ammonia necessary for this.

5. Process according to one or more of Claims 1 to 4, characterised in that while crystalline ammonium sulphate is separated off the effluents are concentrated to ammonium nitrate concentrations of 8 to 12% by weight.

6. Process according to one or more of Claims 1 to 5, characterised in that the solution resulting during the concentration by evaporation crystallization and optionally by subsequent vacuum cooling crystallization is diluted with water to an ammonium sulphate solution which is saturated at between 10 and 35°C and ammonia is added to this while colling to a temperature of 10 to 35°C at a pressure of 101 and 202 k Pa (1.01 to 2.02 bar).

7. Process according to one or more of claims 1 to 6, characterised in that the vacuum cooling crystallization of the redidual mother liquor is carried out at temperatures of 35 to 60°C, preferably 40 to 55°C.

## Revendications

1. Procédé de traitement d'eaux résiduaires contenant du sulfate d'ammonium et contaminées par des composés organiques et éventuellement par du nitrate d'ammonium, moyennant une cristallisation par évaporation, éventuellement en plusieurs étapes, avec séparation de sulfate d'ammonium cristallin, caractérisé en ce qu'on dilue, avec de l'eau, la liqueur mère résiduelle retirée de la dernière étape d'évaporation, éventuellement après une cristallisation par refroidissement sous vide à une température de 10 à 80°C et séparation du sulfate d'ammonium formé qui, de préférence, est recyclé à la cristallisation par évaporation puis, à la solution obtenue, sous une pression allant jusqu'à 506 k Pa (5,06 bars), on ajoute de l'ammoniaque sous forme liquide et/ou sous forme d'eau ammoniacale fortement concentrée, on sépare, de la liqueur mère ammoniacale, le sulfate d'ammonium qui cristallise, on ke lave éventuellement jusqu'à ce qu'il soit exempt d'ammoniac et on le recycle à la cristallisation par évaporation pius, de la liqueur mère ammoniacale, on récupère l'ammoniac par distillation.

2. Procédé suivant la revendication 1, caractérisé en ce qu'on concentre des eaux résiduaires contenant du nitrate d'ammonium, éventuellement en plusieurs étapes et avec séparation de sulfate d'ammonium cristallin, à des concentrations en nitrate d'ammonium de 6 à 14% en poids.

3. Procédé suivant la revendication 1 ou 2, caractérisé en ce qu'on effectue la précipitation ammoniacale du sulfate d'ammonium à la concentration de saturation.

4. Procédé suivant une ou plusieurs des revendications 1 à 3, caractérisé en ce que la chaleur être éliminée lors de la saturation, est dissipée, lors de l'utilisation d'ammoniaque liquide et/ou d'une eau ammoniacale à forte concentration, moyennant un refroidissement par évaporation en chargeant une quantité d'ammoniac supplémentaire nécessaire à cet effet.

5. Procédé suivant une ou plusieurs des revendications 1 à 4, caractérisé en ce qu'on concentre les eaux résiduarires à des concentrations en nitrate d'ammonium de 8 à 12% en poids avec séparation de sulfate d'ammonium cristallin.

6. Procédé suivant une ou plusieurs des revendications 1 à 5, caractérisé en ce qu'on dilue, avec de l'eau, la solution obtenue lors de la concentration moyennant une cristallisation par évaporation et éventuellement moyennant une cristallisation ultérieure par refroidissement sous vide, pour obtenir une solution de sulfate d'ammonium saturée à une température comprise entre 10 et 35°C, solution à lauqelle on ajoute de l'ammoniac en refroidissant à une température de 10 à 35°C sous une pression de 101 à 202 k Pa (1,01 à 2,02 bars).

7. Procédé suivant une ou plusieurs des revendications 1 à 6, caractérisé en ce qu'on effectue la cirstallisation de la liqueur mère résiduelle par refroidissement sous vide à des températures de 35 à 60°C, de préférence, de 40 à 55°C.